# EUROPEAN PATENT APPLICATION

(11) **EP 4 391 650 A1**
(43) Date of publication of application: **26.06.2024**
(21) Application number: 22869018.6
(22) Date of filing: 29.08.2022
(51) Int. Cl.: H04W 40/00

(54) **ROUTING INFORMATION PROCESSING METHOD, COMMUNICATION APPARATUS AND COMMUNICATION NETWORK**

(30) Priority: 15.09.2021 CN 202111083006
(71) Applicant: Huawei Technologies Co., Ltd., Shenzhen, Guangdong 518129 (CN)
(72) Inventor: LOU, Zhe, Shenzhen, Guangdong 518129 (CN); LI, Guangpeng, Shenzhen, Guangdong 518129 (CN); YU, Delei, Shenzhen, Guangdong 518129 (CN)
(74) Representative: Isarpatent
(86) International application number: PCT/CN2022/115599
(87) International publication number: WO 2023/040646

(57) **Abstract**

This application provides a route information processing method, a communication apparatus, and a communication network, applied to the communication technology field. The route information processing method is used on a target node in a first network. The first network is addressed based on a tree first topology structure, and an address of a child node in the first topology structure includes an address of a parent node. Therefore, a node in the first network may calculate a route based on a destination address. When a topology structure of the first network is updated from the first topology structure to a second topology structure, and a connection relationship of a first node changes, the target node in the first network may add route information destined for the first node, so that the target node can still correctly address the first node and a descendant node of the first node. Therefore, the first node and the descendant node of the first node do not need to be readdressed. In this method, stability of the first network is improved, and maintenance costs of nodes are reduced.

## Description

This application claims priority to Chinese Patent Application No. 202111083006.6, filed with the China National Intellectual Property Administration on September 15, 2021 and entitled "ROUTE INFORMATION PROCESSING METHOD, COMMUNICATION APPARATUS, AND COMMUNICATION NETWORK", which is incorporated herein by reference in its entirety.

### TECHNICAL FIELD

This application relates to the communication technology field, and in particular, to a route information processing method, a communication apparatus, and a communication network.

### BACKGROUND

A low-power and lossy network (low-power and lossy network, LLN) is a type of network in which both internal links and routing functions are limited. The network includes a large quantity of constrained nodes, and processor functions, memory, and system power consumption of the constrained nodes are greatly limited. The nodes in the LLN can perform point-to-point, point-to-multipoint, and multipoint-to-point communication. To perform communication between the nodes in the LLN, a routing method needs to be designed for the LLN.

Because functions of the nodes in the LLN are limited, only a small amount of route information can be maintained. In a conventional technology, a route calculation method based on topology addressing is proposed. In the method, each node can maintain a small amount of route information, and a load of the node in the LLN can be reduced.

However, this method still has some problems. For example, when a topology structure of a network changes, a node whose connection relationship changes and a descendant node of the node cannot be addressed based on route calculation. Therefore, these nodes need to be readdressed, and maintenance costs of the network are high.

### SUMMARY

Embodiments of this application provide a route information processing method, a communication apparatus, and a communication network, to resolve a problem that when a topology of a network using topology addressing changes, a node whose connection relationship changes and a descendant node of the node cannot be addressed and need to be readdressed.

To achieve the foregoing objective, the following technical solutions are used in embodiments of this application.

According to a first aspect, a route information processing method is provided. The method may be used on a target node in a first network. The first network corresponds to a first topology structure, and the first topology structure is a tree topology structure. An address of each node other than a root node in the first topology structure includes a first part, and the first part is an address of a parent node of the node. Different nodes have different addresses. The method may include: If an address of a parent node that is of a first node in the first network and that is in a second topology structure is different from a first part of an address of the first node, the target node adds first route information. The first route information includes the address of the first node and an address of a next hop of the target node destined for the first node. The second topology structure is updated from the first topology structure.

Based on this solution, when a topology structure of the first network based on topology addressing changes, the target node in the first network adds the first route information destined for the first node. Therefore, even if the topology of the first network changes, the target node can still address the first node and a child node of the first node, and these nodes do not need to be readdressed.

With reference to the first aspect, in an optional implementation, the target node is any node in a target node set, and the target node set may include a first-type node, a second-type node, and a third-type node. The first-type node is the parent node of the first node in the second topology structure. The second-type node is an ancestor node of the parent node of the first node in the second topology structure, and a next hop of the second-type node that is in the second topology structure and destined for the first node is different from a next hop of the second-type node that is in the first topology structure and destined for the first node. The third-type node is an ancestor node of the first node in the first topology structure, and the third-type node is not an ancestor node of the first node in the second topology structure.

In other words, when a topology of the first node changes, a target node to which the first route information needs to be added is a node whose next hop that is in the second topology structure and destined for the first node is different from a next hop of the node that is in the first topology structure and destined for the first node.

With reference to the first aspect, in an optional implementation, when the target node is the first-type node, the address, in the first route information, of the next hop of the target node destined for the first node is the address of the first node.

With reference to the first aspect, in an optional implementation, the target node may receive first information from the first node. The first information indicates that the first node is a child node of the target node in the second topology structure. Then, the target node adds the first route information based on the first information.

With reference to the first aspect, in an optional implementation, after the target node adds the first route information, the method may further include: If the target node is not an ancestor node of the first node in the first topology structure, the target node sends second information to a parent node of the target node. The second information indicates that a next hop of a parent node of a second node that is in the second topology structure and destined for the first node is the target node. If the target node is an ancestor node of the first node in the first topology structure, the target node sends third information to a first child node of the target node in the first topology structure. The third information indicates that a next hop of the first child node that is in the second topology structure and destined for the first node is a parent node of the first child node in the second topology structure. The first child node is a next hop of the target node that is in the first topology structure and destined for the first node. Based on this solution, after adding the first route information destined for the first node, the node may further notify another node to add route information destined for the first node.

With reference to the first aspect, in an optional implementation, when the target node is the second-type node, the address, in the first route information, of the next hop of the target node destined for the first node is the same as an address of a next hop of the target node that is in the second topology structure and destined for the parent node of the first node.

With reference to the first aspect, in an optional implementation, the target node may receive fourth information from a child node. The fourth information indicates that a next hop of the target node that is in the second topology structure and destined for the first node is the child node. Then, the target node may add the first route information based on the fourth information. The first route information includes the address of the first node and an address of the child node.

With reference to the first aspect, in an optional implementation, after the target node adds the first route information, the method may further include: If the target node is not an ancestor node of the first node in the first topology structure, the target node sends fifth information to a parent node of the target node. The fifth information indicates that a next hop of the parent node of the target node that is in the second topology structure and destined for the first node is the target node. If the target node is an ancestor node of the first node in the first topology structure, the target node sends sixth information to a second child node of the target node in the first topology structure. The sixth information indicates that a next hop of the second child node that is in the second topology structure and destined for the first node is a parent node of the second child node in the second topology structure. The second child node is a next hop of the target node that is in the first topology structure and destined for the first node. Based on this solution, after adding the first route information destined for the first node, the node may further notify another node to add route information destined for the first node.

With reference to the first aspect, in an optional implementation, when the target node is the third-type node, the address, in the first route information, of the next hop of the target node destined for the first node is an address of the parent node of the target node in the second topology structure.

With reference to the first aspect, in an optional implementation, the target node may receive seventh information from a parent node of the target node in the first topology structure. The seventh information indicates that a next hop of the target node that is in the second topology structure and destined for the first node is the parent node of the target node in the second topology structure. Then, the target node may further add the first route information based on the seventh information. The first route information includes the address of the first node and the address of the parent node of the target node in the second topology structure.

With reference to the first aspect, in an optional implementation, after the target node adds the first route information, the method may further include: If the target node is not a parent node of the first node in the first topology structure, the target node sends eighth information to a third child node of the target node in the first topology structure. The eighth information indicates that a next hop of the third child node that is in the second topology structure and destined for the first node is a parent node of the third child node in the second topology structure. The third child node is a next hop of the target node that is in the first topology structure and destined for the first node.

According to a second aspect, a communication apparatus is provided. The communication apparatus may be a target node, a chip or a chip system in the target node, or may be a functional module that is in the target node and that is configured to implement the method in any possible implementation of the first aspect. The communication apparatus may implement a function performed by the target node in any possible implementation of the first aspect, and the function may be implemented by executing corresponding software by hardware. The hardware or the software includes one or more modules corresponding to the function. For example, the communication apparatus may include a transceiver module and a processing module.

With reference to the second aspect, in an optional implementation, the processing module is configured to: when an address of a parent node that is of a first node in a first network and that is in a second topology structure is different from a first part of an address of the first node, add first route information. The first route information includes the address of the first node and an address of a next hop of the target node destined for the first node. The second topology structure is updated from a first topology structure.

With reference to the second aspect, in an optional implementation, the target node is any node in a target node set, and the target node set includes a first-type node, a second-type node, and a third-type node. The first-type node is the parent node of the first node in the second topology structure. The second-type node is an ancestor node of the parent node of the first node in the second topology structure, and a next hop of the second-type node that is in the second topology structure and destined for the first node is different from a next hop of the second-type node that is in the first topology structure and destined for the first node. The third-type node is an ancestor node of the first node in the first topology structure, and the third-type node is not an ancestor node of the first node in the second topology structure.

With reference to the second aspect, in an optional implementation, the target node is the first-type node, and the address, in the first route information, of the next hop of the target node destined for the first node is the address of the first node.

With reference to the second aspect, in an optional implementation, the transceiver module is configured to receive first information from the first node. The first information indicates that the first node is a child node of the target node in the second topology structure. The processing module is further configured to add the first route information based on the first information.

With reference to the second aspect, in an optional implementation, the transceiver module is further configured to: when the target node is not an ancestor node of the first node in the first topology structure, send second information to a parent node of the target node. The second information indicates that a next hop of a parent node of a second node that is in the second topology structure and destined for the first node is the target node. The transceiver module is further configured to: when the target node is an ancestor node of the first node in the first topology structure, send third information to a first child node of the target node in the first topology structure. The third information indicates that a next hop of the first child node that is in the second topology structure and destined for the first node is a parent node of the first child node in the second topology structure. The first child node is a next hop of the target node that is in the first topology structure and destined for the first node.

With reference to the second aspect, in an optional implementation, the target node is the second-type node, and the address, in the first route information, of the next hop of the target node destined for the first node is the same as an address of a next hop of the target node that is in the second topology structure and destined for the parent node of the first node.

With reference to the second aspect, in an optional implementation, the transceiver module is configured to receive fourth information from a child node. The fourth information indicates that a next hop of the target node that is in the second topology structure and destined for the first node is the child node. The processing module is further configured to add the first route information based on the fourth information. The first route information includes the address of the first node and an address of the child node.

With reference to the second aspect, in an optional implementation, the transceiver module is further configured to: when the target node is not an ancestor node of the first node in the first topology structure, send fifth information to a parent node of the target node. The fifth information indicates that a next hop of the parent node of the target node that is in the second topology structure and destined for the first node is the target node. The transceiver module is further configured to: when the target node is an ancestor node of the first node in the first topology structure, send sixth information to a second child node of the target node in the first topology structure. The sixth information indicates that a next hop of the second child node that is in the second topology structure and destined for the first node is a parent node of the second child node in the second topology structure. The second child node is a next hop of the target node that is in the first topology structure and destined for the first node.

With reference to the second aspect, in an optional implementation, the target node is the third-type node, and the address, in the first route information, of the next hop of the target node destined for the first node is an address of the parent node of the target node in the second topology structure.

With reference to the second aspect, in an optional implementation, the transceiver module is configured to receive seventh information from a parent node of the target node in the first topology structure. The seventh information indicates that a next hop of the target node that is in the second topology structure and destined for the first node is the parent node of the target node in the second topology structure. The processing module is further configured to add the first route information based on the seventh information. The first route information includes the address of the first node and the address of the parent node of the target node in the second topology structure.

With reference to the second aspect, in an optional implementation, the transceiver module is configured to: when the target node is not a parent node of the first node in the first topology structure, send eighth information to a third child node of the target node in the first topology structure. The eighth information indicates that a next hop of the third child node that is in the second topology structure and destined for the first node is a parent node of the third child node in the second topology structure. The third child node is a next hop of the target node that is in the first topology structure and destined for the first node.

For technical effect of the second aspect, refer to the first aspect. Details are not described herein again.

According to a third aspect, a communication apparatus is provided, including a processor. The processor is configured to: be coupled to a memory, and after reading computer instructions stored in the memory, perform the method according to any one of the foregoing aspects according to the instructions.

In a possible implementation, the communication apparatus further includes the memory, and the memory is configured to store the computer instructions.

In a possible implementation, the communication apparatus further includes a communication interface, and the communication interface is used by the communication apparatus to communicate with another device. For example, the communication interface may be a transceiver, an input/output interface, an interface circuit, an output circuit, an input circuit, a pin, a related circuit, or the like.

In a possible implementation, the communication apparatus may be a chip or a chip system. When the communication apparatus is the chip system, the communication apparatus may include a chip, or may include the chip and another discrete device.

In a possible implementation, when the communication apparatus is the chip or the chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a fourth aspect, a computer-readable storage medium is provided. The computer-readable storage medium stores instructions. When the instructions are run on a computer, the computer is enabled to perform the method in any one of the foregoing aspects.

According to a fifth aspect, a computer program product including instructions is provided. When the computer program product runs on a computer, the computer is enabled to perform the method in any one of the foregoing aspects.

For technical effect brought by any possible implementation of the third aspect to the fifth aspect, refer to technical effect brought by different implementations of the first aspect or the second aspect. Details are not described herein again.

### BRIEF DESCRIPTION OF DRAWINGS

FIG. 1 is a schematic diagram of a structure of a communication network according to an embodiment of this application;
FIG. 2 is a schematic diagram of a structure of a communication network according to an embodiment of this application;
FIG. 3 is a schematic diagram of a structure of a communication network according to an embodiment of this application;
FIG. 4 is a schematic diagram of a structure of a first network according to an embodiment of this application;
FIG. 5 is a schematic diagram of a scenario in which a topology structure of a first network changes according to an embodiment of this application;
FIG. 6 is a schematic diagram of another scenario in which a topology structure of a first network changes according to an embodiment of this application;
FIG. 7 is a schematic diagram of a structure of a communication apparatus according to an embodiment of this application;
FIG. 8 is a schematic diagram of a route information processing method according to an embodiment of this application;
FIG. 9 is a schematic diagram of another route information processing method according to an embodiment of this application;
FIG. 10 is a schematic diagram of still another route information processing method according to an embodiment of this application;
FIG. 11 is a schematic diagram of yet another route information processing method according to an embodiment of this application; and
FIG. 12 is a schematic diagram of a structure of another communication apparatus according to an embodiment of this application.

### DESCRIPTION OF EMBODIMENTS

Before embodiments of this application are described, some conventional technologies in embodiments of this application are explained and described. It should be noted that, the following explanations and descriptions are intended to facilitate understanding of embodiments of this application, but should not be construed as limiting the protection scope required by embodiments of this application.

An LLN is a type of network in which both internal links and routing functions are limited. The LLN includes a large quantity of constrained nodes. Processor functions, memory, and system power consumption (for example, battery power supply) of the constrained nodes may be greatly limited. These constrained nodes are connected to each other through lossy links, and usually support only low data rate transmission. In addition, another feature of the LLN is that a communication mode is not simple point-to-point, but is point-to-multipoint or multipoint-to-point in most cases, and a communication scenario is complex.

Routing methods need to be designed for communication between nodes in any network, and the LLN is no exception. A common routing method in the conventional technology is that each node maintains a routing table, the routing table stores different route information corresponding to different destination nodes, and each node performs addressing completely based on the routing table.

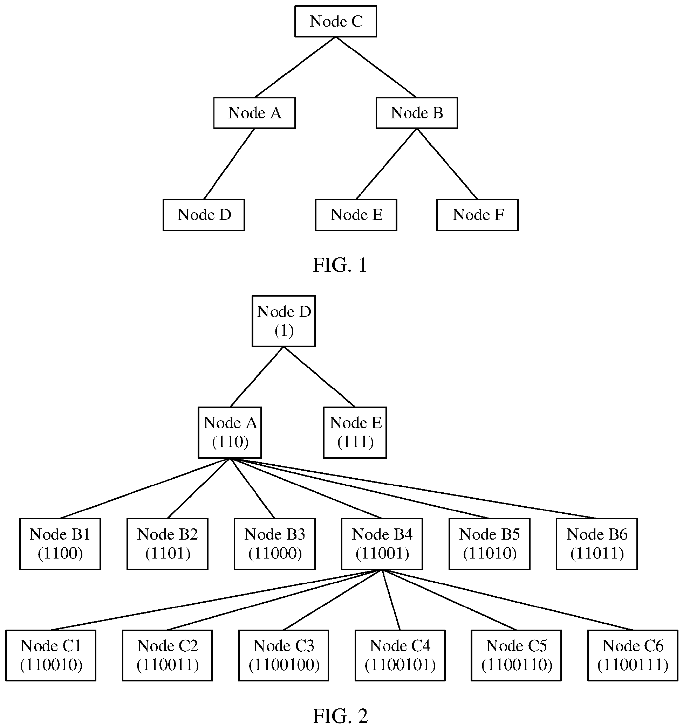

For example, in a communication network shown in FIG. 1, a node C is directly connected to two nodes: a node A and a node B, the node A is directly connected to a node D, and the node B is directly connected to two nodes: a node E and a node F. Therefore, for the node C in the network shown in FIG. 1, if the node C needs to address the node D, the node E, and the node F, a routing table of the node C may be shown in Table 1. Refer to Table 1. It can be learned that a next hop of the node C destined for the node D is the node A, a next hop of the node C destined for the node E is the node B, and a next hop of the node C destined for the node E is the node B.

**Table 1**

| Destination address | Next hop |
|---|---|
| Node D | Node A |
| Node E | Node B |
| Node F | Node B |

However, because there are a large quantity of nodes in the LLN network, and communication behavior may occur between any two nodes, when a routing method based on a routing table is used, each node needs to maintain a large amount of route information. However, memory and system power consumption of the nodes in the LLN are limited, and the large amount of route information cannot be stored and maintained. In addition, in this method, if a topology of the node changes, route information in a routing table also needs to be updated accordingly, and the updated route information needs to be flooded to each node in the entire network. However, a processor function of the node in the LLN is also limited, and the large amount of route information cannot be updated. Consequently, this method is not applicable to the LLN.

In the conventional technology, a route calculation method based on topology addressing is proposed. In this solution, a topology structure of the LLN is first planned as a tree topology structure with a single root node, and addresses are allocated to nodes based on levels of the tree topology structure. An address of each node is used as a header field of an address of a child node of the node, and addresses of different nodes are not repeated. Based on this, each node may determine a forwarding path of a packet based on a relationship between a destination address of the packet and an address of the node.

For example, in a communication network shown in FIG. 2, nodes in the communication network form a tree topology with a single root node. Refer to the topology structure shown in FIG. 2. A node D is a root node, and an address of the node D is 1. Child nodes of the node D include a node A and a node E, where an address of the node A is 110, and an address of the node E is 111. The node A includes child nodes B1 to B6, where an address of the node B1 is 1100, an address of the node B2 is 1101, an address of the node B3 is 11000, an address of the node B4 is 11001, an address of the node B5 is 11010, and an address of the node B6 is 11011. The node B4 includes child nodes C1 to C6, where an address of the node C1 is 110010, an address of the node C2 is 110011, an address of the node C3 is 1100100, an address of the node C4 is 1100101, an address of the node C5 is 1100110, and an address of the node C6 is 1100111. As shown in FIG. 2, headers of addresses of the node A and the node E are the address 1 of their parent node (node D), headers of addresses of the nodes B1 to B6 are the address 110 of their parent node (node A), and headers of addresses of the nodes C1 to C6 are the address 11001 of their parent node (node B4).

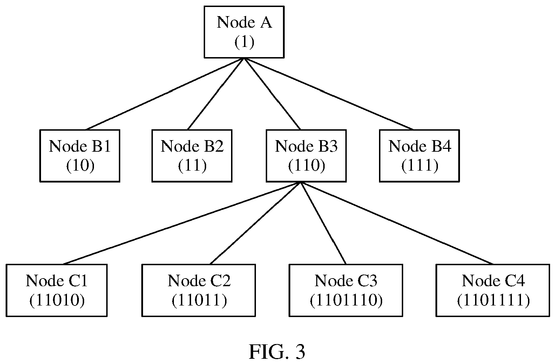

For another example, in a communication network shown in FIG. 3, nodes in the communication network also form a tree topology with a single root node. Refer to the topology structure shown in FIG. 3. A node A is a root node, and an address of the node A is 1. The node A includes child nodes B1 to B4, where an address of the node B1 is 10, an address of the node B2 is 11, an address of the node B3 is 110, and an address of the node B4 is 111. The node B3 includes child nodes C1 to C4, where an address of the node C1 is 11010, an address of the node C2 is 11011, an address of the node C3 is 1101110, and an address of the node C4 is 1101111. As shown in FIG. 3, headers of addresses of the nodes B1 to B4 are the address 1 of their parent node (node A), and headers of addresses of nodes C1 to C4 are the address 110 of their parent node (node B3).

It can be learned from the examples in FIG. 2 and FIG. 3 that a header of an address of each node in a network based on topology addressing is an address of a parent node of the node. In addition, addresses of nodes are different, to ensure uniqueness of the addresses of the nodes.

It should be understood that, based on this addressing manner, a node in the network may calculate a forwarding path of a packet based on a destination address of the packet, to implement a routing process without a need for the node to establish a routing table. Specifically, for any node in the network, when the node receives a packet, the node may view a relationship between a destination address of the packet and an address of the node: 1. If the destination address of the packet is the same as the address of the node, the node receives the packet. 2. If the destination address of the packet is different from the address of the node, the node may determine whether the destination address is a child node of the node. If the destination address is the child node of the node, the node forwards the packet to the child node of the node. It should be understood that each node may learn of address information of a child node of the node. 3. If the destination address of the packet is different from the address of the child node of the node, the node may further determine whether the destination address is a descendant node of the child node. If yes, a header of the destination address should include the address of the child node. In this case, the node also forwards the packet to the corresponding child node. 4. If the destination address of the packet is neither the address of the node, nor the address of the child node of the node or the address of the descendant node of the child node, the local node forwards the packet to a parent node of the node.

Based on the foregoing processing rule, a node in the network can implement routing based on a node address, and a large amount of route information does not need to be configured for the node. This method may be applicable to the LLN.

However, the route calculation method based on topology addressing still has a disadvantage, to be specific, when a topology structure of a node in a network changes, a node whose connection relationship changes and a subordinate node of the node need to be readdressed. Otherwise, after the topology changes, these nodes cannot be addressed by using the route calculation method.

For example, the communication network shown in FIG. 3 is used as an example. If the node B3 is disconnected from the node A, and the node B3 is updated to be connected to the node B1, the node B3 is used as a child node of the node B1. In the updated network, a header field of the address of the node B3 is not an address of a parent node of the node B3. Therefore, in the updated network, another node cannot address the node B3 and the child nodes (including the nodes C1 to C4) of the node B3 according to the route calculation method based on the address. To continue to use the route calculation method for addressing, the node B3 and the child nodes of the node B3 need to be readdressed according to an original rule. For example, the node B3 is addressed by using the address 10 of the node B 1 as a header, and the nodes C1 to C4 are readdressed by using a new address of the node B3 as headers.

It should be understood that, in the route calculation method based on topology addressing, when a node whose topology changes has a large quantity of descendant nodes, a large quantity of nodes need to be readdressed. This increases difficulty in maintaining the nodes.

For these problems, embodiments of this application provide a route information processing method, used on a target node in a first network. An address is allocated to a node in the first network by using the foregoing topology addressing method. In a first topology structure, an address of each node is used as a part of an address of a child node of the node. After the first topology structure is updated to a second topology structure in the first network, if an address of a first node does not include an address of a parent node of the first node in the second topology structure, the target node may automatically add route information destined for the first node. Therefore, even if a connection relationship of the first node changes, the target node can still address the first node, and the first node and a descendant node of the first node do not need to be readdressed.

The following describes technical solutions in embodiments of this application with reference to accompanying drawings in embodiments of this application. In descriptions of this application, unless otherwise specified, "/" indicates an "or" relationship between associated objects. For example, A/B may indicate A or B. In this application, "and/or" describes only an association relationship for describing the associated objects, and represents that three relationships may exist. For example, A and/or B may represent the following three cases: Only A exists, both A and B exist, and only B exists. A and B may be singular or plural. In addition, in the descriptions of this application, "a plurality of" means two or more than two unless otherwise specified. "At least one of the following items (pieces)" or a similar expression thereof refers to any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity and an execution sequence, and the terms such as "first" and "second" do not indicate a definite difference. In addition, in embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner for ease of understanding.

First, an application scenario of the route information processing method provided in embodiments of this application is described.

The route information processing method in embodiments of this application may be used on the target node in the first network. The first network may correspond to the first topology structure, and the first topology structure is a tree topology structure. An address of each node is addressed based on the first topology structure. An address of each node other than a root node includes a first part, and the first part is an address of a parent node of the node. In other words, in the first topology structure, the address of each node is included in an address of a child node of the node. It should be understood that the address of each node other than the root node may further include a second part, and the second part may be used to distinguish different child nodes of a same node, so that addresses of all nodes in the first network are different. A location of a first part in a node address is not limited in embodiments of this application. For example, the first part is a header field of the node address, or the first part may be a tail field of the node address.

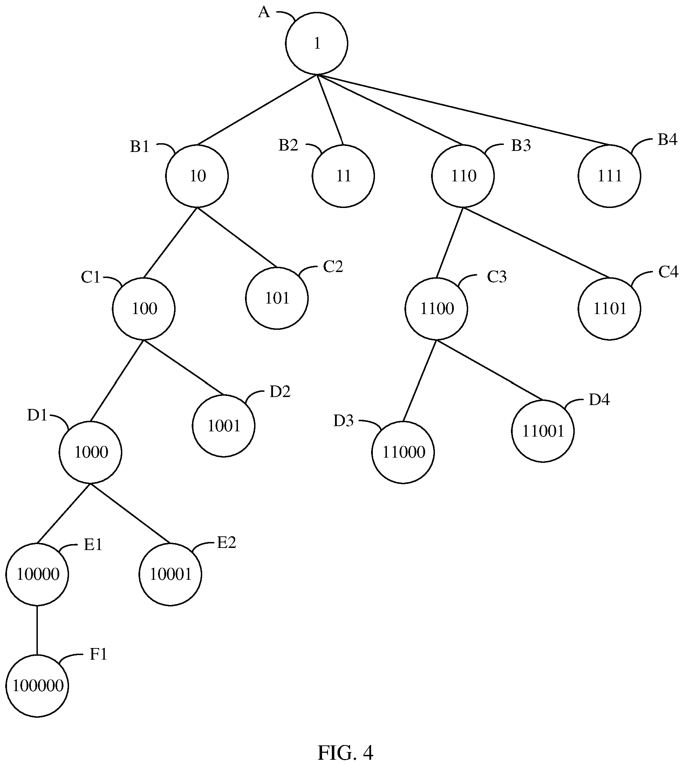

For example, the first part is the header field of the node address. For example, the first topology structure corresponding to the first network may be shown in FIG. 4. A root node in the first topology structure is a node A, and an address of the node A is 1. The node A may include child nodes B 1 to B4. An address of the node B 1 is 10, an address of the node B2 is 11, an address of the node B3 is 110, and an address of the node B4 is 111. Header fields of addresses of the nodes B1 to B4 are all the address of the node A. The node B1 includes child nodes C1 and C2. An address of the node C1 is 100, an address of the node C2 is 101, and header fields of addresses of the node C1 and the node C2 are the address of the node B1. The node B3 includes child nodes C3 and C4. An address of the node C3 is 1100, an address of the node C4 is 1101, and header fields of addresses of the node C3 and the node C4 are the address of the node B3. The node C1 further includes child nodes D1 and D2. An address of the node D1 is 1000, an address of the node D2 is 1001, and header fields of addresses of the node D1 and the node D2 are the address of the node C1. The node C3 further includes child nodes D3 and D4. An address of the node D3 is 11000, an address of the node D4 is 11001, and header fields of addresses of the node D3 and the node D4 are the address of the node C3. The node D1 further includes child nodes E1 and E2. An address of the node E1 is 10000, an address of the node E2 is 10001, and header fields of addresses of the node E1 and the node E2 are the address of the node D1. The node E1 further includes a child node F1. An address of the node F1 is 100000, and a header field of the address of the node F1 is the address of the node E1.

It should be noted that the first topology structure in embodiments of this application is an initial topology structure of the first network, and all nodes in the first network are addressed based on the first topology structure. Because an address of a node other than the root node includes an address of a parent node of the node, a node in the first network may also forward a packet by using a route calculation method based on an address of the node.

The route information processing method provided in embodiments of this application is applied to a scenario in which a topology structure of the first network changes. It should be understood that a changed topology structure is obtained by updating the first topology structure. In the following embodiments of this application, the first topology structure shown in FIG. 4 is used as an example for description.

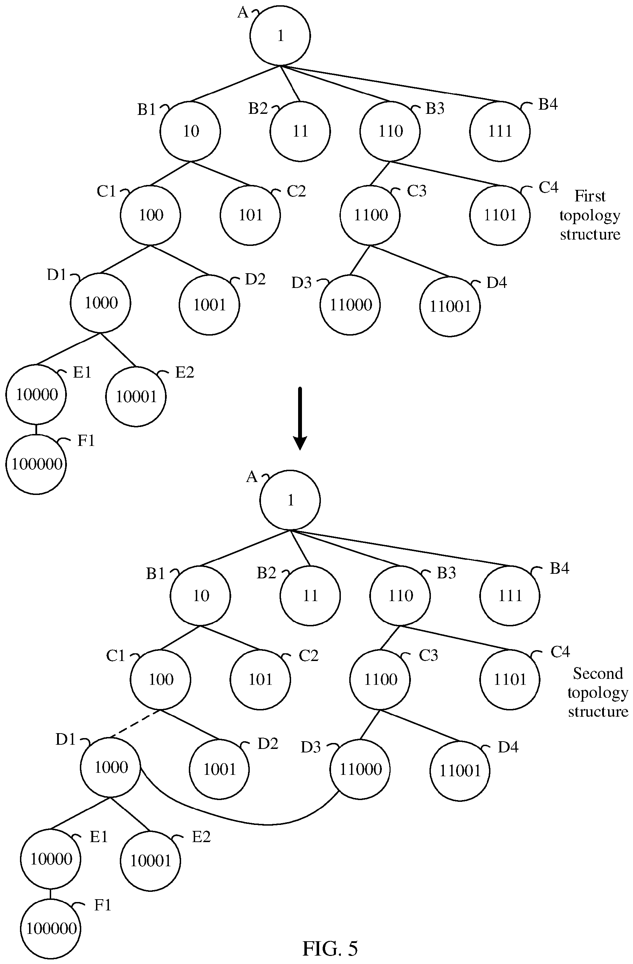

For example, FIG. 5 is a schematic diagram of a scenario in which the topology structure of the first network changes. As shown in FIG. 5, the node D1 is disconnected from (represented by a dashed line in the figure) the parent node C1 in the first topology structure, and is changed to be connected to the node D3, to obtain a current second topology structure. In the second topology structure, the node D1 is a child node of the node D3.

It should be noted that the second topology structure in embodiments of this application is not necessarily obtained by directly updating the first topology structure, and the second topology structure may be obtained by updating a topology structure obtained after the first topology structure is changed.

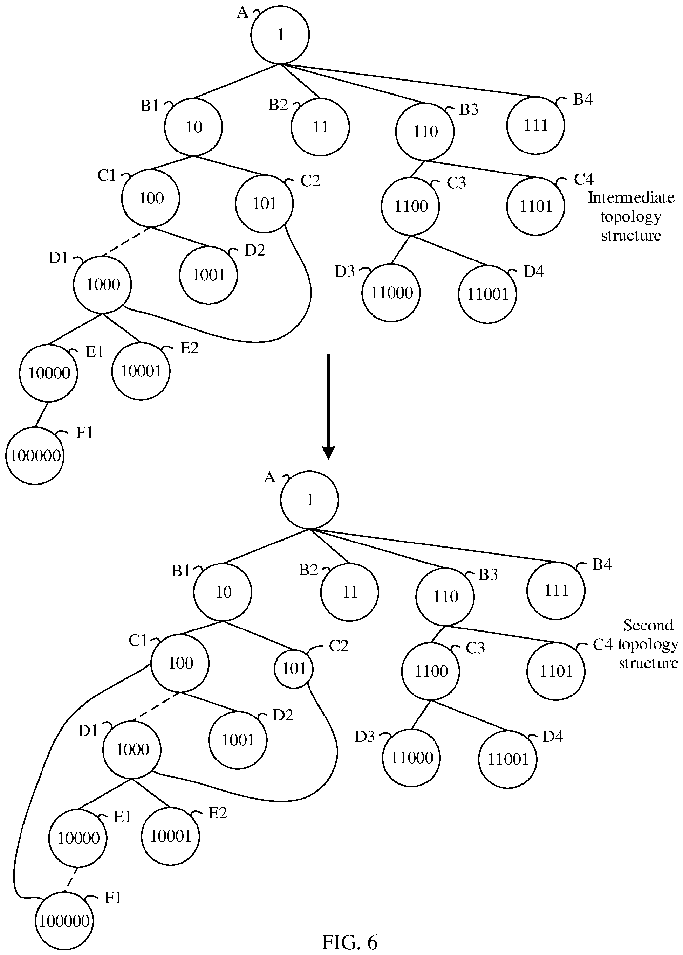

For example, FIG. 6 is a schematic diagram of another scenario in which the topology structure of the first network changes. As shown in FIG. 6, the second topology structure may be obtained after an intermediate topology structure changes. A node F1 in the intermediate topology structure is disconnected from (represented by a dashed line in the figure) a parent node E1, is changed to be connected to a node C1, and is used as a child node of the node C1, to obtain a current second topology structure. However, it should be understood that the intermediate topology structure shown in FIG. 6 may be obtained by updating the first topology structure shown in FIG. 4. Refer to FIG. 4 and FIG. 6. It can be learned that the node D1 is disconnected from (represented by a dashed line in the figure) its parent node C1 in the first topology structure, and is changed to be connected to the node C2, to form the intermediate topology structure.

It should be noted that the second topology structure in embodiments of this application is a corresponding current topology structure when the route information processing method is performed, but does not refer to a specific topology structure. For example, in the intermediate topology structure shown in FIG. 6, when the first topology structure is updated to the intermediate topology structure, the intermediate topology structure may also be considered as the second topology structure, and the route information processing method in embodiments of this application may also be performed.

It should be understood that a network architecture and a service scenario described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to similar technical problems.

Optionally, the node in embodiments of this application may also be referred to as a communication apparatus, which may be a general device or a dedicated device. This is not specifically limited in embodiments of this application.

Optionally, a related function of the node in embodiments of this application may be implemented by one device, or may be jointly implemented by a plurality of devices, or may be implemented by one or more functional modules in one device. This is not specifically limited in embodiments of this application. It may be understood that the foregoing function may be a network element in a hardware device, or may be a software function running on dedicated hardware, or a combination of hardware and software, or a virtualization function instantiated on a platform (for example, a cloud platform).

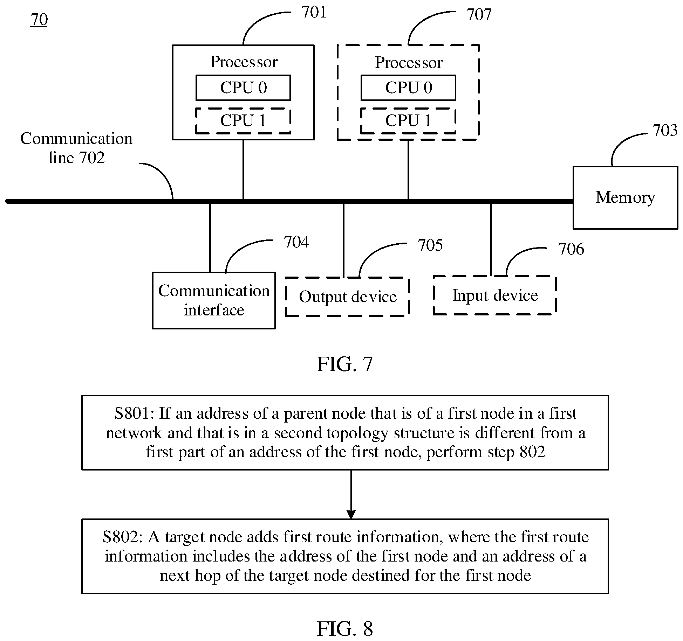

For example, a control device and the related function of the node in this application may be implemented by using a communication apparatus 70 in FIG. 7. FIG. 7 is a schematic diagram of a structure of the communication apparatus 70 according to an embodiment of this application. The communication apparatus 70 includes one or more processors 701, a communication line 702, and at least one communication interface (an example in which the communication apparatus 70 includes a communication interface 704 and one processor 701 is used in FIG. 7 for description). Optionally, the communication apparatus 70 may further include a memory 703.

The processor 701 may be a general-purpose central processing unit (central processing unit, CPU), a microprocessor, an application-specific integrated circuit (application-specific integrated circuit, ASIC), or one or more integrated circuits configured to control program execution in the solutions of this application.

The communication line 702 may include a path, configured to connect different components.

The communication interface 704 may be a transceiver module, and is configured to communicate with another device or a communication network, for example, the Ethernet, a RAN, a wireless local area network (wireless local area network, WLAN), or the like. For example, the transceiver module may be an apparatus, for example, a transceiver or a transceiver machine. Optionally, the communication interface 704 may alternatively be a transceiver circuit located inside the processor 701, and is configured to implement signal input and signal output of the processor.

The memory 703 may be an apparatus with a storage function. For example, the memory 703 may be a read-only memory (read-only memory, ROM) or another type of static storage device capable of storing static information and instructions, may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer, but is not limited thereto. The memory may independently exist and is connected to the processor through the communication line 702. The memory may alternatively be integrated with the processor.

The memory 703 is configured to store computer-executable instructions for executing the solutions of this application, and the processor 701 controls the execution. The processor 701 is configured to execute the computer-executable instructions stored in the memory 703, to implement an address configuration method provided in embodiments of this application.

Alternatively, optionally, in this embodiment of this application, the processor 701 may perform a processing related function in the address configuration method provided in the following embodiments in this application, and the communication interface 704 is responsible for communication with another device or a communication network. This is not specifically limited in embodiments of this application.

Optionally, the computer-executable instructions in embodiments of this application may also be referred to as application program code. This is not specifically limited in embodiments of this application.

During specific implementation, in an embodiment, the processor 701 may include one or more CPUs, such as a CPU 0 and a CPU 1 in FIG. 7.

During specific implementation, in an embodiment, the communication apparatus 70 may include a plurality of processors, such as the processor 701 and a processor 707 in FIG. 7. Each of these processors may be a single-core (single-core) processor or a multi-core (multi-core) processor. The processor herein may include but is not limited to at least one of the following various computing devices that run software: a central processing unit (central processing unit, CPU), a microprocessor, a digital signal processor (DSP), a microcontroller unit (microcontroller unit, MCU), an artificial intelligence processor, or the like. Each computing device may include one or more cores configured to perform an operation or processing by executing software instructions.

In a specific implementation, in an embodiment, the communication apparatus 70 may further include an output device 705 and an input device 706. The output device 705 communicates with the processor 701, and may display information in a plurality of manners. For example, the output device 705 may be a liquid crystal display (liquid crystal display, LCD), a light emitting diode (light emitting diode, LED) display device, a cathode ray tube (cathode ray tube, CRT) display device, a projector (projector), or the like. The input device 706 communicates with the processor 701, and may receive an input from a user in a plurality of manners. For example, the input device 706 may be a mouse, a keyboard, a touchscreen device, or a sensing device.

The communication apparatus 70 may also be referred to as a communication device sometimes, and may be a general-purpose device or a dedicated device. For example, the communication apparatus 70 may be a desktop computer, a portable computer, a network server, a personal digital assistant (personal digital assistant, PDA), a mobile phone, a tablet computer, a wireless terminal device, an embedded device, the foregoing terminal, the foregoing network device, or a device having a structure similar to a structure shown in FIG. 7. A type of the communication apparatus 70 is not limited in this embodiment of this application.

In addition, a composition structure shown in FIG. 7 does not constitute a limitation on the communication apparatus. In addition to the components shown in FIG. 7, the communication apparatus may include more or fewer components than those shown in the figure, or some components may be combined, or different component arrangements may be used.

The following describes the route information processing method provided in embodiments of this application with reference to the first network and the service scenario shown in FIG. 4 to FIG. 6.

The route information processing method provided in embodiments of this application is applied to a case in which a topology structure of the first network is updated from an initial first topology structure to a current second topology structure. As shown in FIG. 8, the method may include the following steps.

S801: If an address of a parent node that is of a first node in the first network and that is in the second topology structure is different from a first part of an address of the first node, perform step 802.

The second topology structure is updated from the first topology structure.

It should be understood that, when a node in the first network performs addressing based on the first topology structure, a first part of an address of each node other than a root node is an address of a parent node of the node, so that each node may determine a next hop of the node destined for another node based on a relationship between an address of the another node and an address of the node. The address of the parent node of the first node in the second topology structure is different from the first part of the address of the first node. This indicates that a connection relationship of the first node changes. Therefore, in the second topology structure, another node other than the first node and a descendant node of the first node cannot address the first node through route calculation.

For example, the first network may be the first network shown in FIG. 4, and a header field of an address of each node other than a root node A is an address of a parent node of the node. The second topology structure may be the second topology structure shown in FIG. 5. The first node may be a node D1, and the node D1 is disconnected from a parent node C1 in the first topology structure, and is connected to a node D3. In the second topology structure, D3 is a new parent node of D1. That the node A sends a packet to the node C1 is used as an example. If a node in the first network uses a route calculation method for addressing, the packet is first sent to the node C1. Because D1 is already disconnected from C1 in the second topology structure, the packet cannot be sent to the node D1.

S802: A target node adds first route information, where the first route information includes the address of the first node and an address of a next hop of the target node destined for the first node.

In this embodiment of this application, the target node may add the first route information, so that the target node can directly determine the next hop of the target node that is in the current second topology structure and destined for the first node based on the first route information. Therefore, even if the connection relationship of the first node in the first network changes and addressing cannot be performed through route calculation, the target node can still correctly address the first node, so that the first node and a child node of the first node do not need to be readdressed. In this solution, stability of the first network can be improved, and a quantity of node configuration times can be reduced.

For example, the second topology structure shown in FIG. 5 is still used as an example. The node A, a node B3, and a node C3 may add route information destined for the node D1 based on the second topology structure, so that when the node A sends a packet to the node D1, the node A, the node B3, and the node C3 may directly address the node D1 based on the route information, so that the packet can correctly reach the node D1.

In conclusion, this application provides a route information processing method, used on the target node in the first network. The first network is addressed based on the tree first topology structure, and an address of a child node in the first topology structure includes an address of a parent node, so that a node in the first network can calculate a route based on a destination address. When the topology structure of the first network is updated from the first topology structure to the second topology structure, and the connection relationship of the first node changes, the target node in the first network may add route information destined for the first node, so that the target node can still correctly address the first node and the child node of the first node. Therefore, the first node and the child node of the first node do not need to be readdressed. In this method, stability of the first network is improved, and maintenance costs of nodes are reduced.

Optionally, the target node in this embodiment of this application is any node in a target node set, and the target node set may include a first-type node, a second-type node, and a third-type node. The first-type node is a parent node of the first node in the second topology structure. The second-type node is an ancestor node of the parent node of the first node in the second topology structure, and a next hop of the second-type node that is in the second topology structure and destined for the first node is different from a next hop of the second-type node that is in the first topology structure and destined for the first node. The third-type node is an ancestor node of the first node in the first topology structure, and the third-type node is not an ancestor node of the first node in the second topology structure.

It should be understood that the target node set may be understood as a node set to which route information destined for the first node needs to be added. For the first-type node, the first-type node is a parent node newly connected to the first node in the second topology structure, and naturally, route information destined for the first node needs to be added. For the second-type node, the second-type node is the ancestor node of the parent node of the first node in the second topology structure, and certainly is also an ancestor node of the first node in the second topology structure. However, the next hop of the second-type node that is in the second topology structure and destined for the first node is different from the next hop of the second-type node that is in the first topology structure and destined for the first node. Therefore, route information destined for the first node also needs to be added. For the third-type node, the third-type node is the ancestor node of the first node in the first topology structure, but is not an ancestor node of the first node in the second topology structure. Therefore, a next hop of the third-type node destined for the first node naturally also changes, and route information destined for the first node also needs to be added.

For example, in the second topology structure shown in FIG. 5, the first node is the node D1, the first-type node may include the node D3, the second-type node may include the node C3, the node B3, and the node A, and the third-type node may include a node B1 and the node C1.

For another example, in a second topology structure shown in FIG. 6, the first node is a node F1, the first-type node may include a node C1, and the third-type node may include nodes D1 and E1. It should be understood that, as shown in FIG. 6, the node C1 is also an ancestor node of a node F1 in the first topology structure. In addition, a next hop of the node C1 destined for the node F1 in the second topology structure is different from a next hop of the node C1 destined for the node F1 in the first topology structure. Therefore, the node C1 is also the second-type node.

It should be noted that in the scenario shown in FIG. 6, a node B1 and a node C2 are ancestor nodes of the node F1 in an intermediate topology structure but are not ancestor nodes of the node F1 in the second topology structure. After the intermediate topology structure is changed to the second topology structure, paths from the node B1 and the node C2 to the node F1 change. However, an address of a node corresponds to the first topology structure, and next hops of the node B1 and the node C2 that go to the node F1 in the first topology structure are the same as next hops of the node B1 and the node C2 that go to the node F1 in the second topology structure. Therefore, the node B 1 and the node C2 do not need to add route information destined for the node F1, and the next hops of the node B1 and the node C2 that go to the node F1 may be determined in a route calculation manner.

Optionally, when the target node is the first-type node, the address, in the first route information, of the next hop of the target node destined for the first node is the address of the first node.

For example, in the second topology structure shown in FIG. 5, the first node is the node D1, the target node is the node D3, and first route information added by the node D3 may be shown in Table 2. A destination address is an address 1000 of the node D1, and a next hop is also the address 1000 of the node D1.

**Table 2**

| Destination address | Next hop |
|---|---|
| 1000 | 1000 |

For another example, in the second topology structure shown in FIG. 6, the first node is the node F1, the target node is the node C1, and first route information added by the node C1 may be shown in Table 3. A destination address is an address 100000 of the node F1, and a next hop is also the address 100000 of the node F1.

**Table 3**

| Destination address | Next hop |
|---|---|
| 100000 | 100000 |

It should be understood that for the first-type node, that is, the parent node of the first node, a next hop in the first route information added by the first-type node may alternatively be an interface connected to the first node.

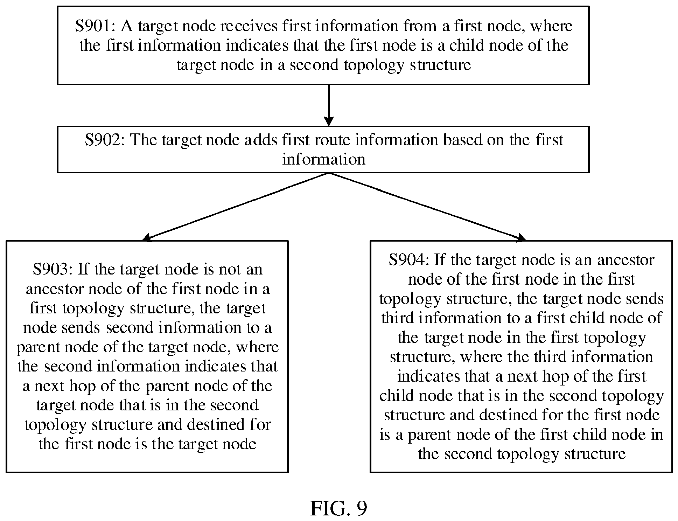

In this embodiment of this application, when the target node is the first-type node, as shown in FIG. 9, the route information processing method performed by the target node may include the following steps.

S901: The target node receives first information from the first node, where the first information indicates that the first node is a child node of the target node in the second topology structure.

For example, in the second topology structure shown in FIG. 5, the node D3 may receive the first information sent by the node D1, to notify the node D3 that D1 is a child node of the node D3 in the second topology structure.

S902: The target node adds the first route information based on the first information.

Still refer to FIG. 9. Optionally, when the target node is the first-type node, after the target node adds the first route information, the route information processing method performed by the target node may further include the following steps.

S903: If the target node is not an ancestor node of the first node in the first topology structure, the target node sends second information to a parent node of the target node, where the second information indicates that a next hop of the parent node of the target node that is in the second topology structure and destined for the first node is the target node.

For example, as shown in FIG. 5, the node D3 in the second topology structure is not an ancestor node of the node D1 in the first topology structure. Therefore, the node D3 may send the second information to the parent node C3 of the node D3. The second information may notify the node C3 that a next hop of the node C3 destined for the node D1 in the second topology structure is the node D3.

In a possible implementation, the second information may be an add (add) command, and the command indicates a parent node of a second node to add route information destined for the first node. The second information may include an operation (operation) field, a destination address field, and a next-hop field.

For example, that the node D3 sends the second information to the node C3 is used as an example. Some of a packet format of the second information may be shown in Table 4. A value of the operation field is add (add), a value of the destination address field is 1000, and a value of the next-hop field is 11000.

**Table 4**

| | | |
|---|---|---|
| Operation: add | Destination address: 1000 | Next hop: 11000 |

It should be understood that, when the target node is the first-type node and the target node is not an ancestor node of the first node in the first topology structure, the parent node of the target node may be the second-type node or the third-type node. An action in step 903 may be understood as that the first-type node notifies the second-type node or the third-type node of route information destined for the first node.

S904: If the target node is an ancestor node of the first node in the first topology structure, the target node sends third information to a first child node of the target node in the first topology structure, where the third information indicates that a next hop of the first child node that is in the second topology structure and destined for the first node is a parent node of the first child node in the second topology structure. The first child node is a next hop of the target node that is in the first topology structure and destined for the first node.

It should be noted that the third information does not carry a specific address of the next hop, because a parent node of the first child node in the second topology structure may not be the target node that sends the third information, and therefore cannot carry the specific address.

For example, as shown in FIG. 6, the node C1 in the second topology structure is also an ancestor node of the node F1 in the first topology structure, and the node C1 may send the third information to the first child node D1 of the node C1 in the first topology structure. The third information may indicate that a next hop of the node D1 that is in the second topology structure and destined for the node F1 is a parent node (that is, the node C2) of the node D1 in the second topology structure. The node C1 is not a parent node of the node D1 in the second topology structure. It should be understood that the third information sent by the node C1 to the node D1 is forwarded by the node B 1 and the node C2, but the node B 1 and the node C2 do not perceive content of the third information.

In a possible implementation, the third information may be an add (add) command, and the command may indicate the first child node to add the route information destined for the first node. A packet format of the third information is the same as that of the second information, and also includes an operation field, a destination address field, and a next-hop field. However, it should be noted that a value of the next-hop field in the third information is not a specific address, but indication information, and indicates that a value of a next hop is the parent node of the first child node in the second topology structure. In this embodiment of this application, the value may be represented by a "default parent node".

In the second topology structure shown in FIG. 6, that the node C1 sends the third information to the node D 1 is used as an example. Some of a packet format of the third information may be shown in Table 5. A value of the operation field is add (add), a value of the destination address field is 100000, and a value of the next-hop field is the default parent node.

**Table 5**

| | | |
|---|---|---|
| Operation: add | Destination address: 100000 | Next hop: default parent node |

It should be understood that, when the target node is the first-type node and the target node is an ancestor node of the first node in the first topology structure, the target node is both the first-type node and the second-type node, and the first child node is the third-type node. An action performed in step 904 may be understood as that the first-type node notifies the third-type node of route information destined for the first node.

Optionally, when the target node is the second-type node, the address of the next hop of the target node destined for the first node recorded in the first route information is the same as an address of a next hop of the target node that is in the second topology structure and destined for the parent node of the first node. It should be understood that, the second-type node is the ancestor node of the parent node of the first node in the second topology structure, and naturally is also the ancestor node of the first node in the second topology structure. Therefore, the address of the next hop of the target node destined for the first node recorded in the first route information is the same as the address of the next hop of the target node that is in the second topology structure and destined for the parent node of the first node.

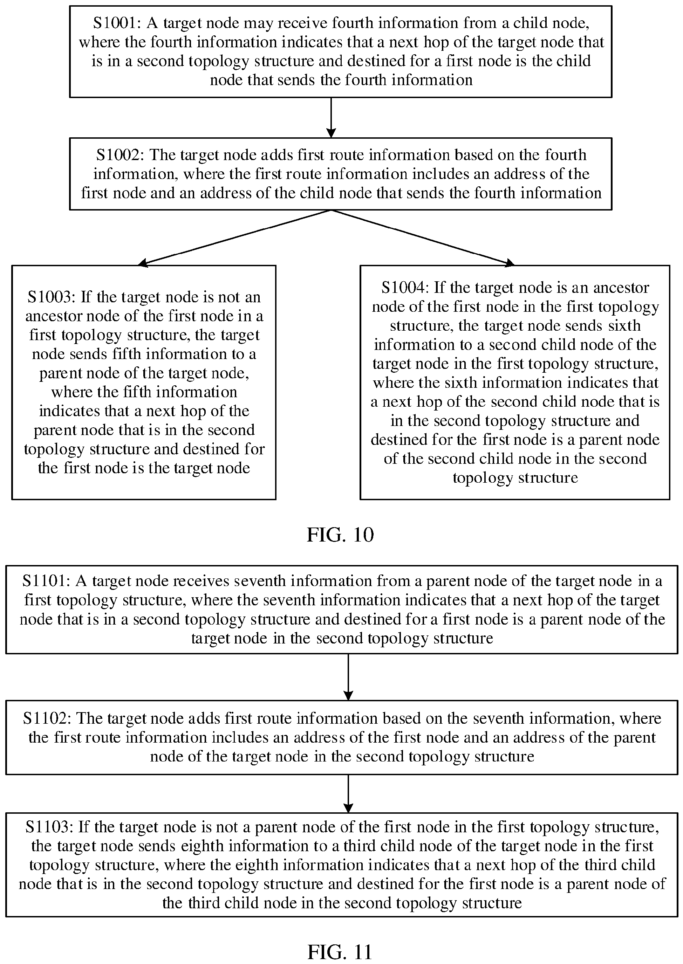

In this embodiment of this application, when the target node is the second-type node, as shown in FIG. 10, the route information processing method performed by the target node may include the following steps.

S 1001: The target node may receive fourth information from a child node, where the fourth information indicates that a next hop of the target node that is in the second topology structure and destined for the first node is the child node that sends the fourth information.

For example, in the second topology structure shown in FIG. 5, the target node is the node C3, and the node C3 may receive the fourth information from the node D3. It should be understood that, in this case, the fourth information received by the node C3 is the second information sent by the node D3 in step 903.

For another example, in the second topology structure shown in FIG. 5, the target node is the node B3, and the node B3 may receive the fourth information from the node C3.

For another example, in the second topology structure shown in FIG. 5, the target node is the node A, and the node A may receive the fourth information from the node B3.

In a possible implementation, the fourth information may be an add command, and the command may indicate the target node to add route information destined for the first node. The fourth information may include an operation field, a destination address field, and a next-hop field. The destination address field is the address of the first node, and the next-hop field is an address of the child node that sends the fourth information.

For example, some of a packet format of the fourth information received by the node C3 from the node D3 in the second topology structure shown in FIG. 5 may be shown in Table 6. A value of the operation field is add (add), a value of the destination address field is 1000, and a value of the next-hop field is 11000.

**Table 6**

| | | |
|---|---|---|
| Operation: add | Destination address: 1000 | Next hop: 11000 |

For another example, some of a packet format of the fourth information received by the node B3 from the node C3 in the second topology structure shown in FIG. 5 may be shown in Table 7. A value of the operation field is add (add), a value of the destination address field is 1000, and a value of the next-hop field is 1100.

**Table 7**

| | | |
|---|---|---|
| Operation: add | Destination address: 1000 | Next hop: 1100 |

For another example, some of a packet format of the fourth information received by the node A from the node B3 in the second topology structure shown in FIG. 5 may be shown in Table 9. A value of the operation field is add (add), a value of the destination address field is 1000, and a value of the next-hop field is 110.

**Table 8**

| | | |
|---|---|---|
| Operation: add | Destination address: 1000 | Next hop: 110 |

S 1002: The target node adds the first route information based on the fourth information, where the first route information includes the address of the first node and the address of the child node that sends the fourth information.

For example, the second topology structure shown in FIG. 5 is used as an example. First route information added by the node C3 may be shown in Table 9. A destination address is 1000, and an address of a next hop is 11000.

**Table 9**

| Destination address | Next hop |
|---|---|
| 1000 | 11000 |

For another example, the second topology structure shown in FIG. 5 is used as an example. First route information added by the node B3 may be shown in Table 9. A destination address is 1000, and an address of a next hop is 1100.

**Table 10**

| Destination address | Next hop |
|---|---|
| 1000 | 1100 |

For example, the second topology structure shown in FIG. 5 is used as an example. First route information added by the node A may be shown in Table 9. A destination address is 1000, and an address of a next hop is 110.

**Table 11**

| Destination address | Next hop |
|---|---|
| 1000 | 110 |

Still refer to FIG. 10. Optionally, when the target node is the second-type node, after the target node adds the first route information, the route information processing method performed by the target node may further include the following steps.

S 1003: If the target node is not an ancestor node of the first node in the first topology structure, the target node sends fifth information to a parent node of the target node, where the fifth information indicates that a next hop of the parent node of the target node that is in the second topology structure and destined for the first node is the target node.

For example, as shown in FIG. 5, the target node is the node C3. The node C3 is not an ancestor node of the node D1 in the first topology structure, and the node C3 may send fifth information to the parent node B3 of the node C3, to indicate that a next hop of the node B3 destined for the first node D1 is the node C3. It should be understood that, in this case, the fifth information sent by the node C3 to the node B3 is the fourth information received by the node B3 in step 1001.

For another example, as shown in FIG. 5, the target node is the node B3. The node B3 is not an ancestor node of the node D1 in the first topology structure, and the node B3 may send fifth information to the parent node A of the node B3, to indicate that a next hop of the node A destined for the first node D1 is the node B3. It should be understood that, in this case, the fifth information sent by the node B3 to the node A is the fourth information received by the node A in step 1001.

In a possible implementation, the fifth information may be an add command, and the command may indicate the parent node of the target node to add route information destined for the first node. The fifth information may include an operation field, a destination address field, and a next-hop field. The destination address field is the address of the first node, and the next-hop field is an address of the target node.

For example, the node C3 sends the fifth information to the node B3. Some of a packet format of the fifth information may be shown in Table 12. A value of the operation field is add (add), a value of the destination address field is 1000, and a value of the next-hop field is 1100.

**Table 12**

| | | |
|---|---|---|
| Operation: add | Destination address: 1000 | Next hop: 1100 |

For another example, the node B3 sends the fifth information to the node A. Some of a packet format of the fifth information may be shown in Table 13. A value of the operation field is add (add), a value of the destination address field is 1000, and a value of the next-hop field is 110.

**Table 13**

| | | |
|---|---|---|
| Operation: add | Destination address: 1000 | Next hop: 110 |

It should be understood that, when the target node is the second-type node and the target node is not an ancestor node of the first node in the first topology structure, the parent node of the target node is the second-type node or the third-type node, and step 1003 may be understood as that the second-type node notifies another second-type node or the third-type node route information destined for the first node.

S 1004: If the target node is an ancestor node of the first node in the first topology structure, the target node sends sixth information to a second child node of the target node in the first topology structure, where the sixth information indicates that a next hop of the second child node that is in the second topology structure and destined for the first node is a parent node of the second child node in the second topology structure. The second child node is a next hop of the target node that is in the first topology structure and destined for the first node.

For example, as shown in FIG. 5, the first node is the node D1, and the target node is the node A. The node A is an ancestor node of the node D1 in the first topology structure, and the node A may send the sixth information to the first child node B 1 of the node A in the first topology structure.

In a possible implementation, the sixth information may be an add command, and the command may indicate the second child node to add route information destined for the first node. The sixth information may include an operation field, a destination address field, and a next-hop field. It should be noted that, a value of the next-hop field in the sixth information is not a specific address, but indication information, and indicates that a value of a next hop is the parent node of the second child node in the second topology structure. In this embodiment of this application, the value may be represented by a "default parent node".

In the second topology structure shown in FIG. 5, that the node A sends the sixth information to the node B 1 is used as an example. Some of a packet format of the sixth information may be shown in Table 14. A value of the operation field is add (add), a value of the destination address field is 100000, and a value of the next-hop field is the default parent node.

**Table 14**

| | | |
|---|---|---|
| Operation: add | Destination address: 1000 | Next hop: default parent node |

It should be understood that, when the target node is the second-type node and the target node is an ancestor node of the first node in the first topology structure, the second child node is the third-type node. The action performed in step 1004 may be understood as that the second-type node notifies the third-type node of route information destined for the first node.

Optionally, when the target node is the third-type node, the address, in the first route information, of the next hop of the target node destined for the first node is an address of the parent node of the target node in the second topology structure.

In this embodiment of this application, when the target node is the third-type node, as shown in FIG. 11, the route information processing method performed by the target node may include the following steps.

S1101: The target node receives seventh information from a parent node of the target node in the first topology structure, where the seventh information indicates that a next hop of the target node that is in the second topology structure and destined for the first node is the parent node of the target node in the second topology structure.

For example, as shown in FIG. 5, the first node is the node D1 and the target node is the node B1. The node B1 may receive the seventh information from the node A. It should be understood that the seventh information received by the node B1 from the node A is the sixth information sent by the node A in step 1004.

For another example, as shown in FIG. 5, the first node is the node D1 and the target node is the node C1. The node C1 receives the seventh information from the node B1.

For another example, as shown in FIG. 6, the first node is the node F1 and the target node is the node D 1. The node D1 may receive the seventh information from the node C1. It should be understood that the seventh information received by the node D1 from the node C1 is the third information sent by the node C1 in step 904.

For another example, as shown in FIG. 6, the first node is the node F1 and the target node is the node E1. The node E1 may receive the seventh information from the node D1.

In a possible implementation, the seventh information may be an add command, and the command may indicate the target node to add route information destined for the first node. The seventh information may include an operation field, a destination address field, and a next-hop field. It should be noted that, a value of the next-hop field in the seventh information is not a specific address, but indication information, and indicates that a value of a next hop is a parent node of the target node in the second topology structure. In this embodiment of this application, the value may be represented by a "default parent node".

For example, in the second topology structure shown in FIG. 5, some of a packet format of the seventh information received by the node B 1 from the node A may be shown in Table 15. A value of the operation field is add (add), a value of the destination address field is 1000, and a value of the next-hop field is the default parent node.

**Table 15**

| | | |
|---|---|---|
| Operation: add | Destination address: 1000 | Next hop: default parent node |

For another example, in the second topology structure shown in FIG. 5, some of a packet format of the seventh information received by the node C 1 from the node B 1 may be shown in Table 16. A value of the operation field is add (add), a value of the destination address field is 1000, and a value of the next-hop field is the default parent node.

**Table 16**

| | | |
|---|---|---|
| Operation: add | Destination address: 1000 | Next hop: default parent node |

For another example, in the second topology structure shown in FIG. 6, some of a packet format of the seventh information received by the node D1 from the node C 1 may be shown in Table 17. A value of the operation field is add (add), a value of the destination address field is 100000, and a value of the next-hop field is the default parent node.

**Table 17**

| | | |
|---|---|---|
| Operation: add | Destination address: 100000 | Next hop: default parent node |

For another example, in the second topology structure shown in FIG. 6, some of a packet format of the seventh information received by the node E1 from the node D1 may be shown in Table 18. A value of the operation field is add (add), a value of the destination address field is 100000, and a value of the next-hop field is the default parent node.

**Table 18**

| | | |
|---|---|---|
| Operation: add | Destination address: 100000 | Next hop: default parent node |

S 1102: The target node adds the first route information based on the seventh information, where the first route information includes the address of the first node and the address of the parent node of the target node in the second topology structure.

For example, as shown in FIG. 5, the first node is the node D1 and the target node is the node B1. First route information of the node B1 may be shown in Table 19. A destination address is 1000, and an address of a next hop is 1.

**Table 19**

| Destination address | Next hop |
|---|---|
| 1000 | 1 |

For example, as shown in FIG. 5, the first node is the node D1 and the target node is the node C1. First route information of the node C1 may be shown in Table 20. A destination address is 1000, and an address of a next hop is 10.

**Table 20**

| Destination address | Next hop |
|---|---|
| 1000 | 10 |

For example, as shown in FIG. 6, the first node is the node F1 and the target node is the node D1. First route information of the node D1 may be shown in Table 21. A destination address is 100000, and an address of a next hop is 101.

**Table 21**

| Destination address | Next hop |
|---|---|
| 100000 | 101 |

For example, as shown in FIG. 6, the first node is the node F1 and the target node is the node E1. First route information of the node E1 may be shown in Table 22. A destination address is 100000, and an address of a next hop is 1000.

**Table 22**

| Destination address | Next hop |
|---|---|
| 100000 | 1000 |

Optionally, when the target node is the first-type node, the route information processing method performed by the target node may further include the following steps.

S 1103: If the target node is not a parent node of the first node in the first topology structure, the target node sends eighth information to a third child node of the target node in the first topology structure, where the eighth information indicates that a next hop of the third child node that is in the second topology structure and destined for the first node is a parent node of the third child node in the second topology structure. The third child node is a next hop of the target node that is in the first topology structure and destined for the first node.

For example, as shown in FIG. 5, the first node is the node D1 and the target node is the node B1. The node B1 is not a parent node of the node D1 in the first topology structure. Therefore, the node B 1 may send the eighth information to the third child node C1. It should be understood that, in this case, the eighth information sent by the node B1 to the third child node C1 is the seventh information received by the node C1 from B1 in step 1101.

For example, as shown in FIG. 6, the first node is the node F1 and the target node is the node D1. The node D1 is not a parent node of the node F1 in the first topology structure. Therefore, the node D1 may send the eighth information to the third child node E1. It should be understood that, in this case, the eighth information sent by the node D1 to the third child node E1 is the seventh information received by the node E1 from D1 in step 1101.

It should be understood that, step 1103 may be understood that the third-type node notifies another third-type node of route information destined for the first node.

It can be learned from the foregoing descriptions that, in this embodiment of this application, first, the first node indicates the first-type node to add route information destined for the first node, then the first-type node notifies the second-type node, and then the second-type node notifies the third-type node, until the parent node of the first node in the first topology structure is notified. It can be learned that, route information destined for the first node added by the target node is first notified by the first node in a single chain.

The following describes in detail the route information processing method in this application with reference to the second topology structure shown in FIG. 5.
(1) The node D1 notifies the node D3 that the node D1 is used as a child node of the node D3 in the second topology structure.
(2) The node D3 adds route information destined for the node D1, where an address of a next hop of the node D3 destined for the node D1 is an address of the node D1.
(3) The node D3 notifies the node C3 that a next hop of the node C3 destined for the node D1 in the second topology structure is the node D3.
(4) The node C3 adds route information destined for the node D1, where an address of a next hop of the node C3 destined for the node D1 is an address of the node D3.
(5) The node C3 notifies the node B3 that a next hop of the node B3 destined for the node D1 in the second topology structure is the node C3.
(6) The node B3 adds route information destined for the node D1, where an address of a next hop of the node B3 destined for the node D1 is an address of the node C3.
(7) The node B3 notifies the node A that a next hop of the node A destined for the node D1 in the second topology structure is the node B3.
(8) The node A adds route information destined for the node D1, where an address of a next hop of the node A destined for the node D1 is an address of the node B3.
(9) The node A notifies the node B1 that a next hop of the node B1 destined for the node D1 in the second topology structure is a parent node of the node B1 in the second topology structure.
(10) The node B1 adds route information destined for the node D1, where an address of a next hop of the node B1 destined for the node D1 is an address of the node A.
(11) The node B1 notifies the node C1 that a next hop of the node C1 destined for the node D1 in the second topology structure is a parent node of the node C1 in the second topology structure.
(12) The node C1 adds route information destined for the node D1, where an address of a next hop of the node C1 destined for the node D1 is an address of the node B1.

So far, the target node in the second topology structure shown in FIG. 5 learns of the route information destined for the first node D1.

The following describes in detail the route information processing method in this application with reference to the second topology structure shown in FIG. 6. It should be understood that the intermediate topology structure is changed from the first topology structure, and route information related to the node D1 may be added after the first topology structure is changed to the intermediate topology structure. Therefore, in the second topology structure in FIG. 6, only addition of route information related to the first node as the node F1 needs to be considered.
(1) The node F1 notifies the node C1 that the node F1 is used as a child node of the node C1 in the second topology structure.
(2) The node C1 adds route information destined for the node F1, where an address of a next hop of the node C1 destined for the node F1 is an address of the node F1.
(3) The node C1 notifies the node D1 that a next hop of the node D1 destined for the node F1 in the second topology structure is a parent node of the node D1 in the second topology structure.
   It should be understood that the node C1 directly notifies the node D1 in this step, and the node B1 and the node C2 on a path do not perceive this step.
(4) The node D1 adds route information destined for the node F1, where an address of a next hop of the node D1 destined for the node F1 is an address of the node C2.
(5) The node D1 notifies the node E1 that a next hop of the node E1 destined for the node F1 in the second topology structure is a parent node of the node E1 in the second topology structure.
(6) The node E1 adds route information destined for the node F1, where an address of a next hop of the node E1 destined for the node F1 is an address of the node D1.

So far, the target node in the second topology structure shown in FIG. 6 learns of the route information destined for the first node F1.

It should be noted that an action of the target node in the foregoing method embodiment may be executed by a processor 701 in a communication apparatus 70 shown in FIG. 7 by invoking application program code stored in a memory 703 to indicate the target node to perform the action.

It may be understood that, in the foregoing embodiments, the method and/or the steps implemented by the target node may alternatively be implemented by a component (for example, a chip or a circuit) applicable to the target node.

Optionally, embodiments of this application further provide a communication apparatus. The communication apparatus is configured to implement the foregoing methods. The communication apparatus may be the target node in the foregoing method embodiment, or an apparatus including the target node, or a component that can be used for the target node. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

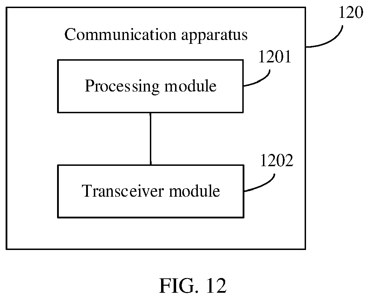

FIG. 12 is a schematic diagram of a structure of a communication apparatus 120. The communication apparatus 120 includes a processing module 1201 and a transceiver module 1202. The transceiver module 1202 may also be referred to as a transceiver unit, and is configured to implement a transceiver function. For example, the transceiver module 1202 may be a transceiver circuit, a transceiver machine, a transceiver, or a communication interface.

For example, the communication apparatus 120 is the target node in the foregoing method embodiments.

The processing module 1201 may be configured to: when an address of a parent node that is of a first node in a first network and that is in a second topology structure is different from a first part of an address of the first node, add first route information. The first route information includes the address of the first node and an address of a next hop of the target node destined for the first node. The second topology structure is updated from a first topology structure.

Optionally, the transceiver module 1202 may be configured to receive first information from the first node. The first information indicates that the first node in the second topology structure is a child node of the target node. The processing module is further configured to add the first route information based on the first information.

Optionally, the transceiver module 1202 may be further configured to: when the target node is not an ancestor node of the first node in the first topology structure, send second information to a parent node of the target node. The second information indicates that a next hop of a parent node of a second node that is in the second topology structure and destined for the first node is the target node. The transceiver module 1202 may be further configured to: when the target node is an ancestor node of the first node in the first topology structure, send third information to a first child node of the target node in the first topology structure. The third information indicates that a next hop of the first child node that is in the second topology structure and destined for the first node is a parent node of the first child node in the second topology structure. The first child node is a next hop of the target node that is in the first topology structure and destined for the first node.

Optionally, the transceiver module 1202 is configured to receive fourth information from a child node. The fourth information indicates that a next hop of the target node that is in the second topology structure and destined for the first node is the child node. The processing module 1201 is further configured to add the first route information based on the fourth information. The first route information includes the address of the first node and an address of the child node.

Optionally, the transceiver module 1202 is further configured to: when the target node is not an ancestor node of the first node in the first topology structure, send fifth information to a parent node of the target node. The fifth information indicates that a next hop of the parent node of the target node that is in the second topology structure and destined for the first node is the target node. The transceiver module 1202 is further configured to: when the target node is an ancestor node of the first node in the first topology structure, send sixth information to a second child node of the target node in the first topology structure. The sixth information indicates that a next hop of the second child node that is in the second topology structure and destined for the first node is a parent node of the second child node in the second topology structure. The second child node is a next hop of the target node that is in the first topology structure and destined for the first node.

Optionally, the transceiver module 1202 is configured to receive seventh information from a parent node of the target node in the first topology structure. The seventh information indicates that a next hop of the target node that is in the second topology structure and destined for the first node is the parent node of the target node in the second topology structure. The processing module 1201 is further configured to add the first route information based on the seventh information. The first route information includes the address of the first node and the address of the parent node of the target node in the second topology structure.

Optionally, the transceiver module 1202 is configured to: when the target node is not a parent node of the first node in the first topology structure, send eighth information to a third child node of the target node in the first topology structure. The eighth information indicates that a next hop of the third child node that is in the second topology structure and destined for the first node is a parent node of the third child node in the second topology structure. The third child node is a next hop of the target node that is in the first topology structure and destined for the first node.

It should be noted that all related content of the steps in the foregoing method embodiments may be cited in function descriptions of corresponding functional modules. Details are not described herein again.

In this embodiment, the communication apparatus 120 is presented in a form of functional modules obtained through division in an integrated manner. The "module" herein may be a specific ASIC, a circuit, a processor that executes one or more software or firmware programs, a memory, an integrated logic circuit, and/or another component capable of providing the foregoing functions. In a simple embodiment, a person skilled in the art may figure out that the communication apparatus 120 may be in a form of the communication apparatus 70 shown in FIG. 7.

For example, a processor 701 in the communication apparatus 70 shown in FIG. 7 may invoke computer-executable instructions stored in a memory 703, to enable the communication apparatus 70 to perform the communication method in the foregoing method embodiments.

Specifically, functions/implementation processes of the processing module 1201 and the transceiver module 1202 in FIG. 12 may be implemented by the processor 701 in the communication apparatus 70 shown in FIG. 7 by invoking the computer-executable instructions stored in the memory 703. Alternatively, a function/an implementation process of the processing module 1201 in FIG. 12 may be implemented by the processor 701 in the communication apparatus 70 shown in FIG. 7 by invoking the computer-executable instructions stored in the memory 703, and a function/an implementation process of the transceiver module 1202 in FIG. 12 may be implemented through a communication interface 704 in the communication apparatus 70 shown in FIG. 7.

Because the communication apparatus 120 provided in this embodiment may perform the foregoing route information processing method, for technical effect that can be achieved by the communication apparatus 120, refer to the foregoing method embodiments. Details are not described herein again.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

Terms such as "component", "module", and "system" used in this application indicate computer-related entities. The computer-related entities may be hardware, firmware, combinations of hardware and software, software, or software in running. For example, a component may be but is not limited to a process that runs on a processor, a processor, an object, an executable file, a thread of execution, a program, and/or a computer. As an example, both a computing device and an application that runs on the computing device may be components. One or more components may reside within a process and/or a thread of execution, and a component may be located on one computer and/or distributed between two or more computers. In addition, these components may be executed from various computer-readable media that have various data structures. These components may communicate by using a local and/or remote process and based on, for example, a signal having one or more data packets (for example, data from one component, where the component interacts with another component in a local system or a distributed system, and/or interacts with another system via a network such as the Internet by using a signal).

This application presents aspects, embodiments, or features around a system that may include a plurality of devices, components, modules, or the like. It should be appreciated and understood that, each system may include another device, component, module, and the like, and/or may not include all devices, components, modules, and the like discussed with reference to the accompanying drawings. In addition, a combination of these solutions may be used.

In addition, the word "example" in embodiments of this application is used to represent giving an example, an illustration, or a description. Any embodiment or design scheme described as an "example" in this application should not be explained as being more preferred or having more advantages than another embodiment or design scheme. To be exact, use of the word "example" is intended to present a concept in a specific manner.

In embodiments of this application, information (information), signal (signal), message (message), or channel (channel) may be interchangeably used sometimes. It should be noted that expressed meanings are consistent when differences are not emphasized. "Of (of)", "relevant (corresponding, relevant)", and "corresponding (corresponding)" may be interchangeably used sometimes. It should be noted that expressed meanings are consistent when differences are not emphasized. "System" and "network" may be interchangeably used sometimes, and meanings expressed by the terms are the same when differences of the terms are not emphasized. For example, "communication system" refers to "communication network".

The network architecture and the service scenario described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to similar technical problems.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A route information processing method, used on a target node in a first network, wherein the first network corresponds to a first topology structure, the first topology structure is a tree topology structure, an address of each node other than a root node in the first topology structure comprises a first part, the first part is an address of a parent node of the node, and different nodes have different addresses; and the method comprises:
if an address of a parent node that is of a first node in the first network and that is in a second topology structure is different from a first part of an address of the first node, adding, by the target node, first route information, wherein the first route information comprises the address of the first node and an address of a next hop of the target node destined for the first node, and the second topology structure is updated from the first topology structure.

2. The method according to claim 1, wherein the target node is any node in a target node set, and the target node set comprises a first-type node, a second-type node, and a third-type node, wherein the first-type node is the parent node of the first node in the second topology structure; the second-type node is an ancestor node of the parent node of the first node in the second topology structure, and a next hop of the second-type node that is in the second topology structure and destined for the first node is different from a next hop of the second-type node that is in the first topology structure and destined for the first node; and the third-type node is an ancestor node of the first node in the first topology structure, and the third-type node is not an ancestor node of the first node in the second topology structure.

3. The method according to claim 2, wherein the target node is the first-type node, and the address, in the first route information, of the next hop of the target node destined for the first node is the address of the first node.

4. The method according to claim 3, wherein the method further comprises:
receiving, by the target node, first information from the first node, wherein the first information indicates that the first node in the second topology structure is a child node of the target node; and
adding, by the target node, the first route information based on the first information.

5. The method according to claim 4, wherein after the adding, by the target node, the first route information, the method further comprises:
if the target node is not an ancestor node of the first node in the first topology structure, sending, by the target node, second information to a parent node of the target node, wherein the second information indicates that a next hop of a parent node of a second node that is in the second topology structure and destined for the first node is the target node; or
if the target node is an ancestor node of the first node in the first topology structure, sending, by the target node, third information to a first child node of the target node in the first topology structure, wherein the third information indicates that a next hop of the first child node that is in the second topology structure and destined for the first node is a parent node of the first child node in the second topology structure, and the first child node is a next hop of the target node that is in the first topology structure and destined for the first node.

6. The method according to claim 2, wherein the target node is the second-type node, and the address, in the first route information, of the next hop of the target node destined for the first node is the same as an address of a next hop of the target node that is in the second topology structure and destined for the parent node of the first node.

7. The method according to claim 6, wherein the method further comprises:
receiving, by the target node, fourth information from a child node, wherein the fourth information indicates that a next hop of the target node that is in the second topology structure and destined for the first node is the child node; and
adding, by the target node, the first route information based on the fourth information, wherein the first route information comprises the address of the first node and an address of the child node.

8. The method according to claim 7, wherein after the adding, by the target node, the first route information, the method further comprises:
if the target node is not an ancestor node of the first node in the first topology structure, sending, by the target node, fifth information to a parent node of the target node, wherein the fifth information indicates that a next hop of the parent node of the target node that is in the second topology structure and destined for the first node is the target node; or
if the target node is an ancestor node of the first node in the first topology structure, sending, by the target node, sixth information to a second child node of the target node in the first topology structure, wherein the sixth information indicates that a next hop of the second child node that is in the second topology structure and destined for the first node is a parent node of the second child node in the second topology structure, and the second child node is a next hop of the target node that is in the first topology structure and destined for the first node.

9. The method according to claim 2, wherein the target node is the third-type node, and the address, in the first route information, of the next hop of the target node destined for the first node is an address of a parent node of the target node in the second topology structure.

10. The method according to claim 9, wherein the method further comprises:
receiving, by the target node, seventh information from a parent node of the target node in the first topology structure, wherein the seventh information indicates that a next hop of the target node that is in the second topology structure and destined for the first node is the parent node of the target node in the second topology structure; and
adding, by the target node, the first route information based on the seventh information, wherein the first route information comprises the address of the first node and the address of the parent node of the target node in the second topology structure.

11. The method according to claim 10, wherein after the adding, by the target node, the first route information, the method further comprises:
if the target node is not a parent node of the first node in the first topology structure, sending, by the target node, eighth information to a third child node of the target node in the first topology structure, wherein the eighth information indicates that a next hop of the third child node that is in the second topology structure and destined for the first node is a parent node of the third child node in the second topology structure, and the third child node is a next hop of the target node that is in the first topology structure and destined for the first node.

12. A communication apparatus, wherein the communication apparatus is a target node in a first network, or a functional module or chip in a target node, the first network corresponds to a first topology structure, the first topology structure is a tree topology structure, an address of each node other than a root node in the first topology structure comprises a first part, the first part is an address of a parent node of the node, and different nodes have different addresses; and the communication apparatus comprises a processing module, wherein
the processing module is configured to: when an address of a parent node that is of a first node in the first network and that is in a second topology structure is different from a first part of an address of the first node, add first route information, wherein the first route information comprises the address of the first node and an address of a next hop of the target node destined for the first node, and the second topology structure is updated from the first topology structure.

13. The communication apparatus according to claim 12, wherein the target node is any node in a target node set, and the target node set comprises a first-type node, a second-type node, and a third-type node, wherein the first-type node is the parent node of the first node in the second topology structure; the second-type node is an ancestor node of the parent node of the first node in the second topology structure, and a next hop of the second-type node that is in the second topology structure and destined for the first node is different from a next hop of the second-type node that is in the first topology structure and destined for the first node; and the third-type node is an ancestor node of the first node in the first topology structure, and the third-type node is not an ancestor node of the first node in the second topology structure.

14. The communication apparatus according to claim 13, wherein the target node is the first-type node, and the address, in the first route information, of the next hop of the target node destined for the first node is the address of the first node.

15. The communication apparatus according to claim 14, wherein the communication apparatus further comprises a transceiver module, wherein
the transceiver module is configured to receive first information from the first node, wherein the first information indicates that the first node is a child node of the target node in the second topology structure; and
the processing module is further configured to add the first route information based on the first information.

16. The communication apparatus according to claim 15, wherein
the transceiver module is further configured to: when the target node is not an ancestor node of the first node in the first topology structure, send second information to a parent node of the target node, wherein the second information indicates that a next hop of a parent node of a second node that is in the second topology structure and destined for the first node is the target node; or
the transceiver module is further configured to: when the target node is an ancestor node of the first node in the first topology structure, send third information to a first child node of the target node in the first topology structure, wherein the third information indicates that a next hop of the first child node that is in the second topology structure and destined for the first node is a parent node of the first child node in the second topology structure, and the first child node is a next hop of the target node that is in the first topology structure and destined for the first node.

17. The communication apparatus according to claim 13, wherein the target node is the second-type node, and the address, in the first route information, of the next hop of the target node destined for the first node is the same as an address of a next hop of the target node that is in the second topology structure and destined for the parent node of the first node.

18. The communication apparatus according to claim 17, wherein the communication apparatus further comprises a transceiver module, wherein
the transceiver module is configured to receive fourth information from a child node, wherein the fourth information indicates that a next hop of the target node that is in the second topology structure and destined for the first node is the child node; and
the processing module is further configured to add the first route information based on the fourth information, wherein the first route information comprises the address of the first node and an address of the child node.

19. The communication apparatus according to claim 18, wherein
the transceiver module is further configured to: when the target node is not an ancestor node of the first node in the first topology structure, send fifth information to a parent node of the target node, wherein the fifth information indicates that a next hop of the parent node of the target node that is in the second topology structure and destined for the first node is the target node; and
the transceiver module is further configured to: when the target node is an ancestor node of the first node in the first topology structure, send sixth information to a second child node of the target node in the first topology structure, wherein the sixth information indicates that a next hop of the second child node that is in the second topology structure and destined for the first node is a parent node of the second child node in the second topology structure, and the second child node is a next hop of the target node that is in the first topology structure and destined for the first node.

20. The communication apparatus according to claim 13, wherein the target node is the third-type node, and the address, in the first route information, of the next hop of the target node destined for the first node is an address of a parent node of the target node in the second topology structure.

21. The communication apparatus according to claim 20, wherein the communication apparatus further comprises a transceiver module, wherein
the transceiver module is configured to receive seventh information from a parent node of the target node in the first topology structure, wherein the seventh information indicates that a next hop of the target node that is in the second topology structure and destined for the first node is the parent node of the target node in the second topology structure; and
the processing module is further configured to add the first route information based on the seventh information, wherein the first route information comprises the address of the first node and the address of the parent node of the target node in the second topology structure.

22. The communication apparatus according to claim 21, wherein
the transceiver module is configured to: when the target node is not a parent node of the first node in the first topology structure, send eighth information to a third child node of the target node in the first topology structure, wherein the eighth information indicates that a next hop of the third child node that is in the second topology structure and destined for the first node is a parent node of the third child node in the second topology structure, and the third child node is a next hop of the target node that is in the first topology structure and destined for the first node.

23. A communication apparatus, wherein the communication apparatus comprises a processor and a memory, wherein
the memory is configured to store computer-executable instructions; and when the processor executes the computer-executable instructions, the communication apparatus is enabled to perform the method according to any one of claims 1 to 11.

24. A communication apparatus, wherein the communication apparatus comprises a processor and an interface circuit, wherein
the interface circuit is configured to receive computer-executable instructions, and transmit the computer-executable instructions to the processor; and
the processor is configured to execute the computer-executable instructions, and the communication apparatus is enabled to perform the method according to any one of claims 1 to 11.

25. A computer-readable storage medium, wherein the computer-readable storage medium stores a computer program; and when the computer program is executed by a computer, the computer is enabled to perform the method according to any one of claims 1 to 11.
